# EUROPEAN PATENT SPECIFICATION

(11) **EP 4 660 692 B1**
(45) Date of publication and mention of the grant of the patent: **09.12.2026**
(21) Application number: 25210751.1
(22) Date of filing: 22.03.2019
(51) Int. Cl.: G02C 11/00, G06F 1/16, G06F 1/20, G02C 5/10, G02C 5/22

(54) **EYEWEAR DEVICE HINGE ASSEMBLY**
SCHARNIERANORDNUNG FÜR BRILLENVORRICHTUNG
ENSEMBLE CHARNIÈRE DE DISPOSITIF DE LUNETTES

(30) Priority: 23.03.2018 US 201862647057 P
(43) Date of publication of application: 10.12.2025
(62) Document number(s) of the earlier application(s) in accordance with Art. 76 EPC: 19715767.0 / 3 769 151
(73) Proprietor: Snap Inc., Santa Monica, CA 90405 (US)
(72) Inventor: CLOPP, Emily Lauren, Santa Monica, 90405 (US); LIN, Jun, Santa Monica, 90405 (US); MOSKOWITZ, Douglas Wayne, Santa Monica, 90405 (US); STEGER, Stephen Andrew, Santa Monica, 90405 (US); STREETS, Nicholas Daniel, Santa Monica, 90405 (US)
(74) Representative: Mathys & Squire

(56) References cited:
- CN-U- 88 203 065
- IT-A1- TV20 130 076
- US-A1- 2012 127 420
- US-A1- 2012 155 064
- & XP093349056

## Description

### PRIORITY

This application claims the benefit of priority of U.S. Patent Application Serial No. 62/647,057, filed on March 23, 2018.

### BACKGROUND

Many electronic devices have components that are hingedly connected to a body of the device. For example, electronics-enabled eyewear devices (also referred to as smart glasses) typically have a pair of temples that are hingedly connected to an eyewear frame holding a pair of lenses. The mounting of a hinge formation on a device body to form part of the hinge mechanism for such connections can be problematic.

Such hinge mountings are regularly exposed to torsional and tensile loading, and should be able to tolerate such loading without damaging a housing for electronics components on which the hinge mechanism is mounted, which housings are in many instances of a polymeric plastics material. Moreover, the hinge mounting is often preferably watertight, to protect electronics components located within the housing from environmental or ambient moisture. CN 88 203 065 U discloses a spectacle hinge with electrical components. Existing mechanisms for incorporating hinge mechanisms in housings forming part of electronic devices do not satisfy these requirements.

### BRIEF DESCRIPTION OF THE DRAWINGS

The appended drawings illustrate merely example embodiments of the present disclosure and cannot be considered as limiting its scope. To facilitate collation of numbered items in the description to the drawings, the first digit of each numbered item typically corresponds to the figure in which that item first appears. In the drawings:
FIG. 1 is a schematic of a three-dimensional view of an electronics-enabled device in the form of a pair of smart glasses having a pair of temples hingedly mounted on an eyewear frame at opposite lateral end pieces of the eyewear frame, according to an example embodiment.
FIG. 2 is a schematic three-dimensional view of a housing assembly incorporated in an end piece of the eyewear device of FIG. 1, according to an example embodiment, a polymeric plastics housing of the end piece being shown in broken lines in FIG. 2 to expose components of a hinge assembly located within a housing cavity defined by the housing.
FIG. 3 is a cross-sectional side view of the end piece housing and hinge assembly of FIG. 2, according to an example embodiment.
FIG. 4 is a bottom view of the hinge assembly of FIG. 3, according to an example embodiment, the bottom view being seen from within the housing cavity to show an anchor plate forming part of the hinge assembly.
FIG. 5 is a part-sectional three dimensional view of a housing-and hinge assembly to form part of an end piece of an eyewear device, according to an example embodiment.

### DETAILED DESCRIPTION

The present invention is defined by the claims. One aspect of the disclosure provides a hinge assembly mounted on a housing forming part of an electronic device, the hinge assembly comprising a metal hinge member having a hinge post that extends through a mounting hole in a wall of the housing, the hinge post being connected to a metal anchor plate on an inner side of the housing wall to be rotationally and axially fast with the anchor plate.

The anchor plate may have an area multiple times the size of a footprint of the hinge member, removal of the hinge member in a direction transversely away from the housing wall being prevented by obstruction of the hinge plate against an inner side of the housing wall. In some embodiments, the hinge member defines a shoulder or flange that bears against the housing wall on an outer side thereof, so that at least part of the housing wall is sandwiched between the anchor plate and the flange or shoulder, movement of the hinge member axially into the mounting hole being resisted by obstruction of the flange or shoulder against the housing wall.

In some embodiments, the anchor plate may be rotationally keyed to the housing wall, so as to prevent rotation of the anchor plate relative to the housing, and so that rotation of the hinge member about a rotational axis extending transversely through the housing wall is prevented by the anchor plate, via its rotational connection to the hinge member.

The anchor plate is in some embodiments welded to the hinge post. In some such embodiments, connection of the anchor plate to the hinge post may be by laser spot welding. In a particular embodiment, a series of laser spot welds extend circumferentially about a central axis of the hinge post. Instead, or in addition, the anchor plate may be clamped to the housing wall by a securing screw that is screwingly received in the hinge post and that has a screw head located on the inner side of the housing wall.

In some embodiments, the hinge member is sealingly mounted in the mounting hole. In one such embodiment, an annular sealing member is received on the hinge member, for example being located in a radial recess in the hinge post and being in sealing engagement both with the hinge post and the mounting wall.

In some embodiments, the hinge assembly is in thermally conductive communication with one or more heat-generating electronic components located within the housing, so that the anchor plate and the hinge member form part of a thermal conductive path providing for heat management by conduction of heat through the hinge assembly.

A benefit of the techniques outlined above and described in more detail below with reference to example embodiments illustrated in the drawings is that it provides for increased structural integrity of the hinge mount. Tensile loading (e.g., by forces pulling a temple away from the housing) is transferred to the housing over an increased area provided by the anchor plate, while torsional loading (e.g., by twisting forces exerted on a temple) is likewise transmitted to the housing at a greater lever arm provided by a periphery of the anchor plate. These and additional benefits will become clear from the detailed description that follows. A further benefit is that the relatively large metal components provided in some embodiments by the anchor plate and the hinge member together forms a robust and reliable thermal conductive path whose reliability of connection is ensured in some instances by welded and claimed connection.

The description that follows includes devices, systems, methods, and techniques that embody illustrative embodiments of the disclosure. In the following description, for the purposes of explanation, numerous specific details are set forth in order to provide an understanding of various embodiments of the disclosed subject matter. It will be evident, however, to those skilled in the art, that embodiments of the disclosed subject matter may be practiced without these specific details. In general, well-known structures and techniques are not necessarily shown in detail.

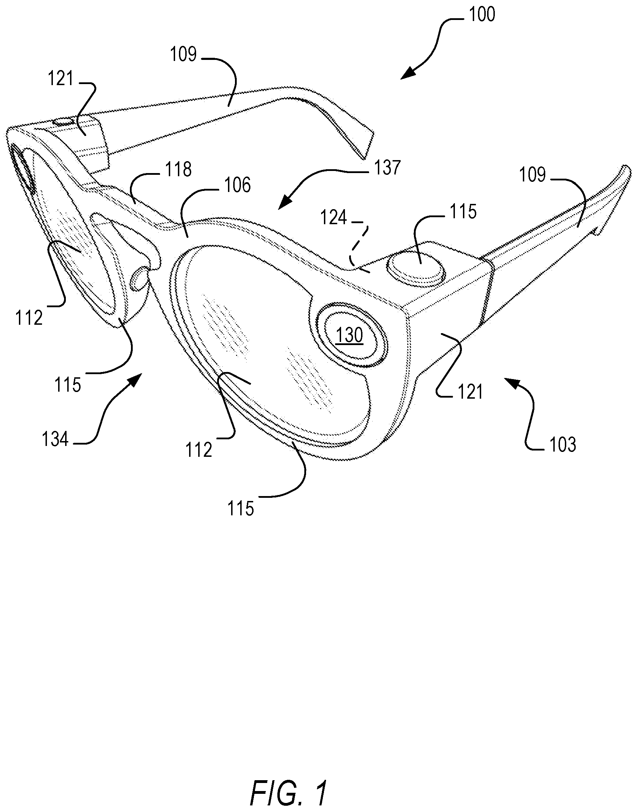

FIG. 1 shows an oblique front view of an electronics-enabled device in the example form of an eyewear device 100 that has incorporated there in a pair of hinge mechanisms mounted on a body 103 of the eyewear device 100 according to an example embodiment of the disclosed techniques. The body 103 comprises a front piece or frame 106 and a pair of temples 109 hingedly connected to the frame 106 for supporting the frame 106 in position on a user's face when the temples 109 are in an extended or wearable configuration, as shown in FIG. 1. The frame 106 is in this example embodiment at least partially provided by one or more substantially rigid molded components formed of a polymeric plastics material.

The eyewear device 100 has a pair of optical elements in the form of a pair of optical lenses 112 held by corresponding optical element holders in the form of a pair of lens rims 115 forming part of the frame 106. The rims 115 are connected by a bridge 118. In other embodiments, one or both of the optical elements can be a display, a display assembly, or a lens and display combination. The eyewear device 100 can, in such embodiments, provide a virtual reality headset or an augmented reality display.

The frame 106 includes a pair of end pieces 121 defining lateral end portions of the frame 106. In this example, a variety of electronics components are housed in one or both of the end pieces 121, as discussed in more detail below. In some embodiments, the frame 106 is formed of a single piece of material, so as to have a unitary or monolithic construction. In this example embodiment, each end piece 121 is formed by a separate molded plastics component.

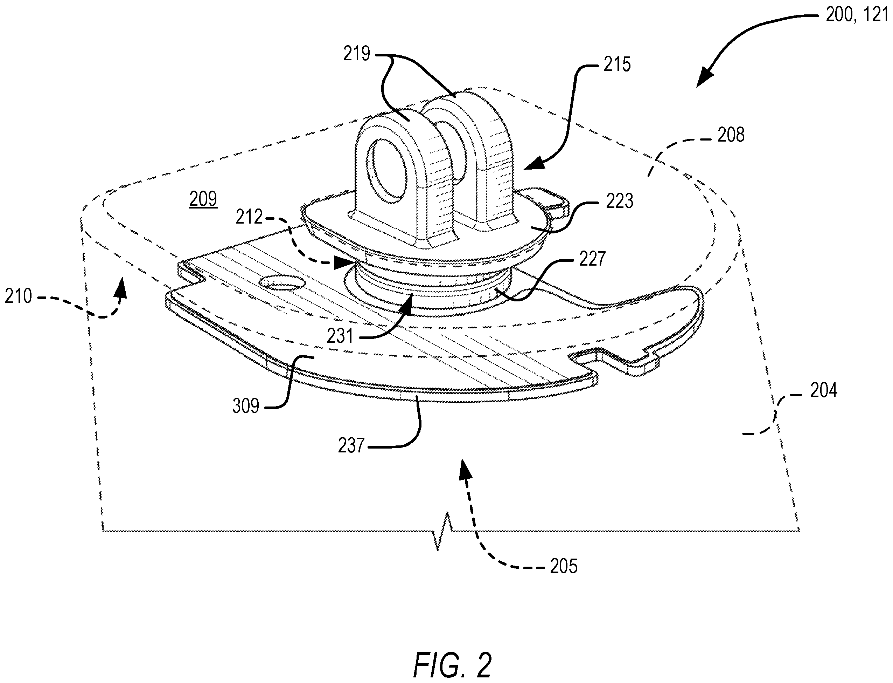

The temples 109 are hingedly coupled to the respective end pieces 121 by respective hinge mechanisms so as to be hingedly movable between a wearable mode (as shown in FIG. 1) and a collapsed mode in which the temples 109 are pivoted towards the frame 106 to lie substantially flat against it. Details of the mounting of a hinge member forming part of the hinge mechanism at each of the end pieces 121 will be discussed in greater depth with reference to FIGS. 2-5.

In this description, directional terms such as front, back, forwards, and rearwards are to be understood with reference to a direction of view of a user when the eyewear device 100 is worn. Thus, the frame 106 has a front side 134 facing away from the user when worn, and an opposite rear side 137 facing towards the user when the eyewear device 100 is worn. Similarly, the terms horizontal and vertical as used in this description with reference to different features of the eyewear device 100 are to be understood as corresponding to the orientation of the eyewear device 100 when it is level on the face of a user looking forwards. A horizontal plane of the eyewear device 100 thus extends more or less between the end pieces 121 (with horizontal directions lying within the horizontal plane including a lateral direction extending between the end pieces 121, and a fore-and-aft direction perpendicular thereto), while a vertical or upright direction of the eyewear device 100 extends transversely to the horizontal plane, such that the lenses 112 have a more or less vertical or upright orientation. These terms are to be understood without consideration of the current actual orientation of the eyewear device 100 relative to Earth's gravity.

The eyewear device 100 has onboard electronics 124 including a computing device, such as a computer, which can, in different embodiments, be of any suitable type so as to be carried by the body 103. In some embodiments, various components comprising the onboard electronics 124 are at least partially housed in one or both of the temples 109. In the present embodiment, various components of the onboard electronics 124 are housed in the lateral end pieces 121 of the frame 106. The onboard electronics 124 includes one or more processors with memory, wireless communication circuitry, and a power source (in this example embodiment being a rechargeable battery, e.g. a lithium-ion battery). The onboard electronics 124 comprises low-power, high-speed circuitry, and, in some embodiments, a display processor. Various embodiments may include these elements in different configurations or integrated together in different ways.

As mentioned, the onboard electronics 124 includes a rechargeable battery. In some embodiments, the battery is disposed in one of the temples 109. In this example embodiment, however, the battery is housed in one of the end pieces 121, being electrically coupled to the remainder of the onboard electronics 124.

The eyewear device 100 is camera-enabled, in this example comprising a camera 130 mounted in one of the end pieces 121 and facing forwards so as to be aligned more or less with the direction of view of a wearer of the eyewear device 100. The camera 130 is configured to capture digital photo as well as digital video content. Operation of the camera 130 is controlled by a camera controller provided by the onboard electronics 124, image data representative of images or video captured by the camera 130 being temporarily stored on a memory forming part of the onboard electronics 124. In some embodiments, the eyewear device 100 can have a pair of cameras 130, e.g. housed by the respective end pieces 121.

The eyewear device 100 further includes one or more input and output devices permitting communication with and control of the camera 130. In particular, the eyewear device 100 includes one or more input mechanisms for enabling user control of one or more functions of the eyewear device 100. In this embodiment, the input mechanism comprises a push button mechanism 115 mounted on the frame 106 so as to be accessible on top of one of the end pieces 121 for pressing by the user.

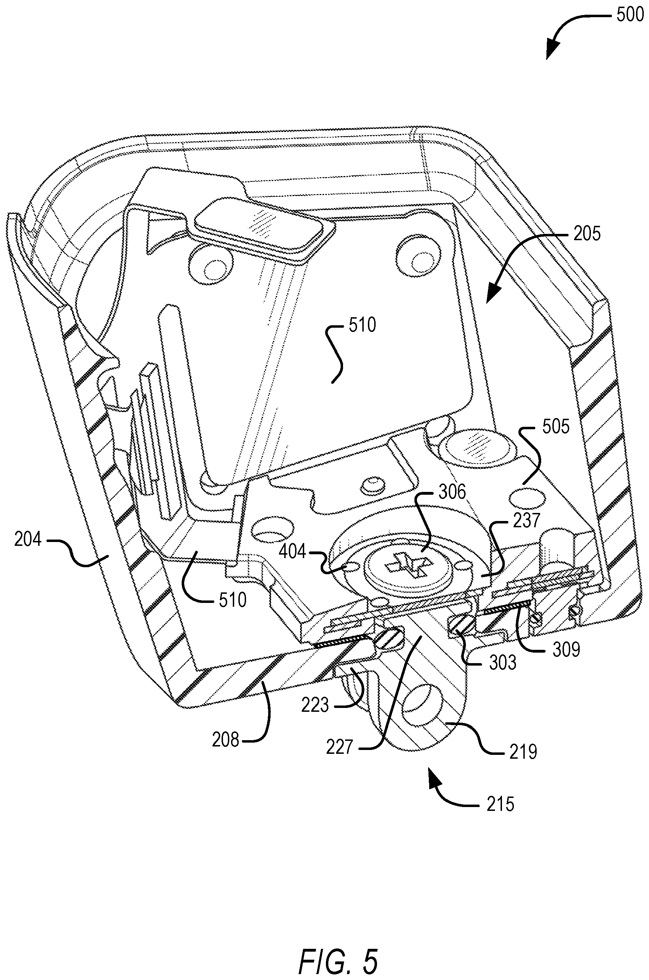

FIG. 2 shows a housing assembly 200 to be incorporated in the eyewear device 100 to provide one of the end pieces 121, according to one example embodiment. To afford a clearer view of internal components of the housing assembly 200, a housing 204 on which a hinge member 215 is mounted is shown in FIG. 2 in broken lines. The housing 204 is a molded component of a polymeric plastics material and defines a housing cavity 205 in which a number of electronic components of the eyewear device is to be housed (see, for example, FIG. 5). A rear side of the housing cavity 205 (i.e., that part of the housing 204 that faces rearwards when it forms part of the eyewear device 100) is closed off by a rear wall 208. The housing cavity 205 is located towards and inner side 210 of the rear wall 208, while an outer side 209 of the rear wall 208 faces towards the exterior of the housing 204.

The rear wall 208 defines a mounting hole 212 extending transversely through it for receiving and holding part of the hinge member 215. In this description, directional terms related to an unspecified axis (such as the terms axial, circumferential, radial, and the like) are to be understood as defining directions relating to an axis extending centrally through the mounting hole 212, being substantially perpendicular to the rear wall 208.

The hinge member 215 is a metal component of one-piece construction, and includes a circular cylindrical hinge post 227 extending co-axially through the complementary circular cylindrical mounting hole 212 in the rear wall 208. The hinge member 215 further includes a hinge formation in the form of a pair of hinge knuckles 219 that project axially away from the rear wall 208, when the hinge post 227 is seated in the mounting hole 212. It will be appreciated that the hinge knuckles 219 are in use be connected to a complementary set of hinge knuckles on an associated temple 109, for example being connected by a hinge pin that connects the hinge knuckles 219 to the temple's knuckles to provide a hinge mechanism connecting the temple 109 to the housing 204.

Between the hinge knuckles 219 and the hinge post 227, the hinge member 215 defines a base flange 223 that is larger in diameter than the hinge post 227. Obstruction of the base flange 223 against the rear wall 208 thus locates the hinge member 215 in axial position, and prevents axial passage of the hinge member 215 through the mounting hole 212. Note that, in this example embodiment, the mounting hole 212 defines a shallow depression or cavity at its mouth (i.e., on the outer side 209 of the rear wall 2082) complementary in shape and size to the base flange 223, so that an axially outer surface of the base flange 223 is flush with the surface of the rear wall 208 on its outer side 209. Note further that the base flange 223 and the cavity in which it is located is non-circular in circumferential outline, thus keying or indexing the hinge knuckles 219 in their proper orientation about the longitudinal axis of the hinge member 215.

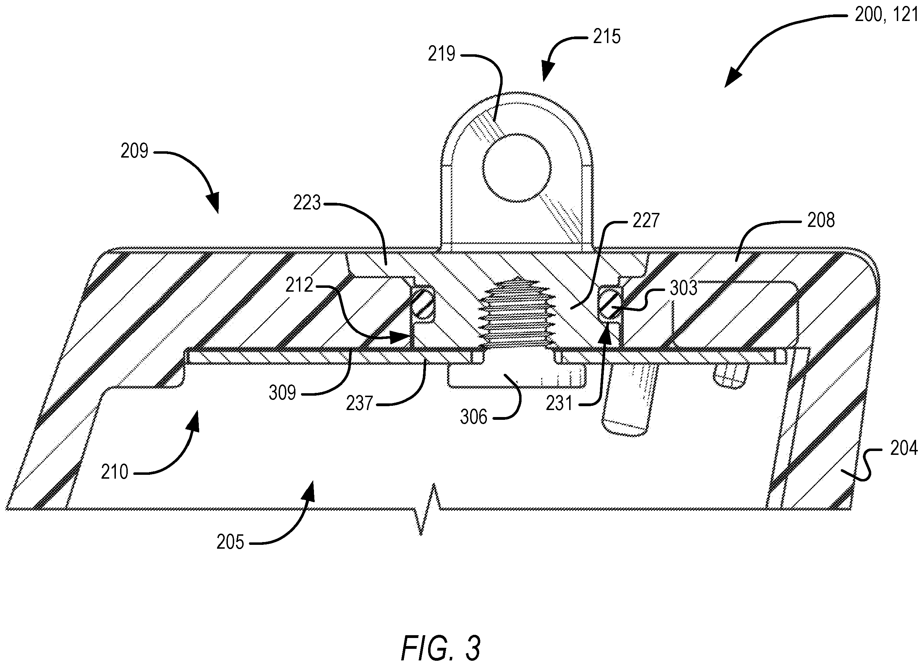

The hinge post 227 defines in its cylindrical surface a radial recess 231 for receiving an O-ring 303 (FIG. 3) to provide a sealing interface between the hinge post 227 and the rear wall 208 within the mounting hole 212.

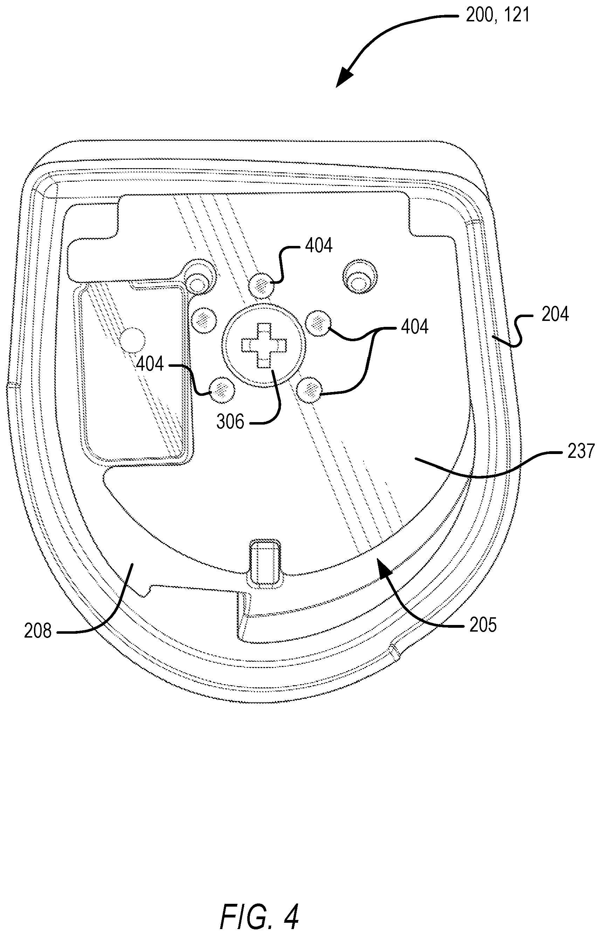

As will be described in greater detail with reference to FIGS. 3 and 4, the hinge post 227 is connected at the inner side 210 of the rear wall 208 to an anchor plate 237. The anchor plate 237 extends transversely relative to the hinge post 227 (in this case lying in a plane perpendicular to the longitudinal axis of the hinge post 227), being substantially parallel to the rear wall 208. Part of the rear wall 208 is sandwiched or clamped, without any play, between the anchor plate 237 and the base flange 223 of the hinge member 215.

The anchor plate 237 is a metal component, in this example embodiment being a stamped sheet metal plate, and has an area significantly larger than that of the base flange 223 to which it is opposed. In this example, the approximate radius of the anchor plate 237 relative to the hinge post 227 is more than twice that of the base flange 223. Note, further, that the anchor plate 237 has a non-circular shape, and is received in the housing cavity 205 such that it is rotationally keyed to the rear wall 208. With such rotational keying is meant that no relative rotation between the anchor plate 237 and the housing 204 about the hinge post 227 is possible, due to physical obstruction between the anchor plate 237 and the housing 204.

The anchor plate 237 is both rotationally and translationally fast with the hinge post 227. In this embodiment, as will be described with reference to FIG. 4, the hinge post 227 is welded to the anchor plate 237. The anchor plate 237 is in this embodiment furthermore attached to the rear wall 208 by a double-sided adhesive layer 309 (FIG. 3) located in adhesive contact between the anchor plate 237 and the inner side 210 of the rear wall 208. The double-sided adhesive layer 309 provides a redundant water seal (in addition to that provided by the O-ring 303), and also provides an additional support for mechanical transfer to the housing 204, via the anchor plate 237, of loads applied to the hinge knuckles 219.

Turning now to FIG. 3, it will be seen that the connection of the anchor plate 237 to the hinge post 227 in this example embodiment further includes a securing screw 306 that passes through an opening in the anchor plate 237 and is screwingly received co-axially within the hinge post 227. Part of the anchor plate 237 is not only held captive between the head of the securing screw 306 and the hinge post 227, but is clamped onto the hinge post 227 by the head of the securing screw 306.

The screw 306 is thus tensioned during assembly such that it is under continuous tensile load, continuously exerting a compressive clamping force on the anchor plate 237. Note that the adhesive layer 309 is in this example embodiment located not only between the anchor plate 237 and the rear wall 208, but extends to the interface between the anchor plate 237 and the hinge post 227. The clamping force applied by the securing screw 306 thus promotes adhesive connection via the adhesive layer 309 of the anchor plate 237 to the hinge post 227. Some example embodiments may dispense with the securing screw 306.

The sealing interface provided by the O-ring 303 between the hinge post 227 and the rear wall 208 can clearly be seen in FIG. 3. Radial compression of the O-ring 303 ensures a watertight seal between the hinge post 227 and the rear wall 208. It will be appreciated that the mounting mechanism thus in this instance provides for a double seal to prevent ingress of water and other contaminants into the housing cavity 205, the double seal being provided by the O-ring 303 and the adhesive layer 309 respectively.

As illustrated in FIG. 3, the anchor plate 237 in this example embodiment bears against the rear wall 208, being separated from the rear wall 208 by the adhesive layer 309 only. As will be described with reference to the embodiments of FIG. 5, the anchor plate 237 can in other embodiments be separated from the rear wall 208 by one or more components sandwiched between the anchor plate 237 and the rear wall 208, such as, for example parts of a plastic insert overmolded on to the anchor plate 237.

In FIG. 4, the anchor plate 237 is shown in profile as seen from the interior of the housing cavity 205. Note that the non-circular outline of the anchor plate 237 is located in close abutment with the peripheral wall of the housing 204, and is rotationally keyed to the housing 204 by being intermeshed with one or more protuberances on the inner side 210 rear wall 208.

FIG. 4 also illustrates the welded connection between the anchor plate 237 and the hinge post 227. In particular, the welded connection in this example embodiment comprises a series of spot welds 404 formed in a laser welding operation. The spot welds 404 comprise a series of welds extending circumferentially around the central axis of the hinge post 227. It will be appreciated that the spot welds 404 connect the anchor plate 237 and the hinge post 227 together to prevent both axial separation and relative rotation.

In addition to providing for structural connection of the hinge member 215 to the housing 204, the anchor plate 237 in some embodiments serves a further function of providing a mounting point for one or more internal components located in the housing cavity 205. FIG. 5 illustrates one such example embodiment, in which a housing assembly 500 includes an electronics mounting structure in the form of a plastics insert 505 overmolded on to the anchor plate 237 prior to assembly. A flexible printed circuit board 510 is mounted at least partially on the composite mounting structure provided by the anchor plate 237 and the plastics insert 505. A number of other internal electronics components are additionally mounted on the composite mounting structure thus provided.

Yet further, the anchor plate 237 and hinge member 215 can in some embodiments serve as thermal conductors in a heat management system to conduct heat away from the housing cavity 205. In the example embodiment of FIG. 5, for example, the PCB 510 (and, in some embodiments, additional heat-generating components in the housing cavity 205) is connected in heat transfer relationship with the anchor plate 237, so that heat generated by the PCB 510 during operation is conducted away from the housing cavity 205, via the anchor plate 237 and hinge member 215, to the hinge knuckles 219 and beyond.

It is a benefit of the hinge mounting techniques described with reference to the example embodiments that they provide for greater structural integrity and tolerance of axial and rotational loads than is the case with existing mounting techniques. In particular, axial tensile loads are borne by substantially the entire inner surface of the rear wall 208, due to transfer of such tensile loads by the hinge member 215 to the anchor plate 237 through the welded connection and the clamping screw 306. Torsional loads are likewise resisted by rotational keying of the anchor plate 237 to the housing 204. The increased lever arm of torsional resistive forces acting on the periphery of the anchor plate 237, as compared to, say, a key on the hinge post, means that smaller resistive forces are required to resist a given torsional load. In this manner, reliability and structural integrity of the housing assembly 200 is substantially greater than existing systems.

The mounting mechanism thus provides for the assembly of a metal hinge to the plastics housing 204 without visible external fasteners, thereby being both aesthetically pleasing and tamper-resistant. Yet further, reliable water-sealing of the hinge mounting is provided by a redundant sealing mechanism provided by the O-ring 303 and the double-sided adhesive layer 309.

Also, location of the metal anchor plate 237 within the housing cavity 205, being of a substantially stronger and more rigid material than is the case with the polymeric plastics housing 204, provides a reliable and convenient fastening point for other assembled components within the housing 204. An even further benefit of the disclosed mounting techniques is that the overall stack provides a heat transfer path for heat sinking between internal components and the exterior. Clamped contact between the anchor plate 237 and the hinge member 215 promotes reliable and effective heat conduction across the interface between them

It will be seen that various different example embodiments are disclosed by the foregoing description.

## Claims

1. A housing assembly (200) comprising:
a housing (204) defining a housing cavity (205) for holding electronics components, the housing including a housing wall (208) that defines a mounting hole (212) extending transversely therethrough, the housing wall (208) having an outer side and having an opposite inner side which borders the housing cavity (205);
a hinge member (215) mounted at least partially in the mounting hole (212), the hinge member (215) comprising a hinge formation (219) projecting from the outer side of the housing wall (208) for connection to a complementary hinge formation (219) to form a hinge mechanism, the hinge member (215) being anchored against axial movement through the mounting hole (212) towards the inner side, the hinge member (215) comprising a hinge post (227) extending axially through at least part of the mounting hole (212);
an anchor plate (237) located on the inner side of the housing wall (208), the anchor plate (237) being transverse to the mounting hole (212) and being connected to the hinge member (215) such that axial movement of the hinge formation (219) away from the outer side of the housing wall (208) is resisted by obstruction of the anchor plate (237) by the housing wall (208), wherein the hinge member (215) and the anchor plate (237) are metal components and wherein the hinge post (227) is connected to the anchor plate (237); and
electronics located within the housing cavity (205), the electronics being mounted on the anchor plate (237) such that the anchor plate (237) is in heat transfer relationship with one or more heat generating components of the electronics, wherein the anchor plate (237) and the hinge member (215) are thermally connected for heat conduction between them, so that the anchor plate (237) and the hinge member (215) form part of a heat transfer path from the housing cavity (205) to an external heatsink.

2. The housing assembly (200) of claim 1, wherein the one or more heat generating components of the electronics comprises a printed circuit board that is mounted on the anchor plate (237) and is connected to the anchor plate (237) to be in heat transfer relationship therewith.

3. The housing assembly (200) of claim 1 or claim 2, wherein connection of the anchor plate (237) to the hinge member (215) is such that the anchor plate (237) is in clamped contact with the hinge member (215), thereby promoting effective heat conduction from the anchor plate (237) to the hinge member (215).

4. The housing assembly (200) of any one of claims 1-3, wherein the hinge member (215) is anchored against axial movement towards the inner side of the housing wall (208) by a flange (223) forming part of the hinge member (215), the flange (223) being located on the outer side of the housing wall (208) and extending transversely relative to the mounting hole (212), such that at least part of the housing wall (208) is sandwiched between the anchor plate (237) and the flange (223), the anchor plate (237) being larger in area than the flange (223) of the hinge member (215).

5. The housing assembly (200) of any one of claims 1-4, further comprising a sealing member located radially about the hinge post (227) to provide a sealing interface between the hinge post (227) and the housing wall (208).

6. The housing assembly (200) of any one of claims 1-5, wherein connection of the anchor plate (237) to the hinge member (215) is such that the anchor plate (237) is rotationally fast with the hinge member (215), the anchor plate (237) being rotationally anchored relative a longitudinal axis of the hinge post (227), rotation of the hinge member (215) relative to the mounting hole (212) being resisted by rotational anchoring of the anchor plate (237) within the housing (204).

7. The housing assembly (200) of claim 6, wherein the anchor plate (237) is non-circular in outline and is located in a complementary non-circular cavity defined by the housing (204), thereby to resist rotation of the anchor plate (237) relative to the housing (204).

8. The housing assembly (200) of any one of claims 1-7, wherein the housing wall (208) is of a polymeric plastics material.

9. The housing assembly (200) of any one of claims 1-8, wherein the connection of the anchor plate (237) to the hinge post (227) comprises a welded connection.

10. The housing assembly (200) of claim 9, wherein the connection of the anchor plate (237) to the hinge post (227) further comprises a securing screw (306) co-axial with the mounting hole (212) and screwingly received in the hinge post (227), such that a part of the anchor plate (237) is held captive between a head of the securing screw (306) and the hinge post (227), the securing screw (306) clamping the anchor plate (237) against the hinge member (215).

11. The housing assembly (200) of any one of claims 1-10, further comprising an adhesive layer (309) located between the anchor plate (237) and the housing wall (208), adhesively attaching the anchor plate (237) to the inner side of the housing wall (208).

12. The housing assembly (200) of claim 11, wherein the adhesive layer (309) is shaped and positioned such as to create a seal against ingress or moisture into the housing cavity (205) via the mounting hole (212).

13. A device that comprises:
a device body; and
the housing assembly (200) of any one of claims 1-12, the housing assembly (200) being incorporated in the device body.

14. The device of claim 13, wherein the device is an eyewear device comprising:
an eyewear frame (106) that defines one or more optical element holders for holding respective optical elements within view of a user, when the eyewear device is worn, the housing assembly (200) being incorporated in the eyewear frame such that the hinge formation (219) of the hinge member (215) projects from a lateral end portion of the eyewear frame (106);
a temple (109) that is hingedly connected to the eyewear frame (106) to be displaceable relative to the eyewear frame (106) between a folded position and an extended position in which the eyewear device is in a wearable configuration; and
a hinge mechanism by which the temple (109) is hingedly connected to the eyewear frame (106), the hinge mechanism comprising cooperating hinge formations (219) provided respectively by:
the hinge formation (219) of the hinge member (215) mounted on the housing assembly (200); and
a complementary hinge formation (219) attached to a proximal end of the temple (109).

15. A method of manufacturing an eyewear device, the method comprising:
locating a hinge member (215) on a housing wall (208) of a housing (204) for electronics components such that a hinge formation (219) forming part of the hinge member (215) projects away from an outer side of the housing wall (208) for connection to a complementary hinge formation (219) of a hinge mechanism to hingedly connect a temple component (109) to an eyewear frame (106), a flange (223) forming part of the hinge member (215) being located on the outer side of the housing wall (208), the hinge member (215) comprising a hinge post (227) extending axially through at least part of the mounting hole (212);
locating an anchor plate (237) on an inner side of the housing wall (208), within a housing cavity (205) defined by the housing (204), the anchor plate (237) being substantially parallel to the housing wall (208), wherein the hinge member (215) and the anchor plate (237) are metal components and wherein the hinge post (227) is connected to the anchor plate (237);
attaching the anchor plate (237) to the hinge member (215), such that at least part of the housing wall (208) is sandwiched between the anchor plate (237) and the flange (223), movement of the hinge member (215) away from the outer side of the housing wall (208) being resisted by obstruction of the anchor plate (237) against the housing wall (208); and
locating electronics within the housing cavity (205) so as to mount the electronics on the anchor plate (237) such that the anchor plate (237) is in heat transfer relationship with one or more heat generating components of the electronics, wherein the anchor plate (237) and the hinge member (215) are thermally connected for heat conduction between them, so that the anchor plate (237) and the hinge member (215) form part of a heat transfer path from the housing cavity (205) to an external heatsink.

## Patentansprüche

1. Gehäuseanordnung (200), die Folgendes umfasst:
ein Gehäuse (204), das einen Gehäusehohlraum (205) zur Aufnahme von Elektronikkomponenten definiert, wobei das Gehäuse eine Gehäusewand (208) aufweist, die Befestigungsloch (212) definiert, das sich quer durch sie hindurch erstreckt, wobei die Gehäusewand (208) eine Außenseite und eine gegenüberliegende Innenseite aufweist, die den Gehäusehohlraum (205) begrenzt;
ein Scharnierelement (215), das zumindest teilweise in dem Befestigungsloch (212) angebracht ist, wobei das Scharnierelement (215) eine Scharnierformation (219) umfasst, die von der Außenseite der Gehäusewand (208) zur Verbindung mit einer komplementären Scharnierformation (219) vorsteht, um einen Scharniermechanismus zu bilden, wobei das Scharnierelement (215) gegen eine axiale Bewegung durch das Befestigungsloch (212) zur Innenseite hin verankert ist, wobei das Scharnierelement (215) einen Scharnierpfosten (227) umfasst, der sich axial durch zumindest einen Teil des Befestigungslochs (212) erstreckt;
eine Ankerplatte (237), die an der Innenseite der Gehäusewand (208) angeordnet ist, wobei die Ankerplatte (237) quer zum Befestigungsloch (212) liegt und mit dem Scharnierelement (215) verbunden ist, so dass einer axialen Bewegung der Scharnierformation (219) weg von der Außenseite der Gehäusewand (208) durch die Blockierung der Ankerplatte (237) durch die Gehäusewand (208) entgegengewirkt wird, wobei das Scharnierelement (215) und die Ankerplatte (237) Metallkomponenten sind und wobei der Scharnierpfosten (227) mit der Ankerplatte (237) verbunden ist; und
Elektronik, die in dem Gehäusehohlraum (205) angeordnet ist, wobei die Elektronik an der Ankerplatte (237) angebracht sind, so dass die Ankerplatte (237) in Wärmeübertragungsbeziehung mit einer oder mehreren wärmeerzeugenden Komponenten der Elektronik steht, wobei die Ankerplatte (237) und das Scharnierelement (215) thermisch miteinander verbunden sind, um Wärme zwischen sich zu leiten, so dass die Ankerplatte (237) und das Scharnierelement (215) Teil eines Wärmeübertragungspfades von dem Gehäusehohlraum (205) zu einem externen Kühlkörper bilden.

2. Gehäuseanordnung (200) nach Anspruch 1, wobei die eine oder mehreren wärmeerzeugenden Komponenten der Elektronik eine Platine umfasst, die an der Ankerplatte (237) angebracht ist und mit der Ankerplatte (237) so verbunden ist, dass sie in Wärmeübertragungsbeziehung mit dieser steht.

3. Gehäuseanordnung (200) nach Anspruch 1 oder Anspruch 2, wobei die Verbindung der Ankerplatte (237) mit dem Scharnierelement (215) derart ist, dass die Ankerplatte (237) in Klemmkontakt mit dem Scharnierelement (215) steht, wodurch eine effektive Wärmeleitung von der Ankerplatte (237) zu dem Scharnierelement (215) gefördert wird.

4. Gehäuseanordnung (200) nach einem der Ansprüche 1-3, wobei das Scharnierelement (215) gegen eine axiale Bewegung in Richtung der Innenseite der Gehäusewand (208) durch einen Flansch (223) verankert ist, der einen Teil des Scharnierelements (215) bildet, wobei der Flansch (223) an der Außenseite der Gehäusewand (208) angeordnet ist und sich quer zu dem Befestigungsloch (212) erstreckt, so dass zumindest ein Teil der Gehäusewand (208) zwischen der Ankerplatte (237) und dem Flansch (223) eingeklemmt ist, wobei die Ankerplatte (237) flächenmäßig größer ist als der Flansch (223) des Scharnierelements (215).

5. Gehäuseanordnung (200) nach einem der Ansprüche 1-4, die ferner ein Dichtungselement umfasst, das radial um den Scharnierpfosten (227) angeordnet ist, um eine Dichtungsschnittstelle zwischen dem Scharnierpfosten (227) und der Gehäusewand (208) bereitzustellen.

6. Gehäuseanordnung (200) nach einem der Ansprüche 1-5, wobei eine Verbindung der Ankerplatte (237) mit dem Scharnierelement (215) derart ist, dass die Ankerplatte (237) mit dem Scharnierelement (215) drehfest ist, wobei die Ankerplatte (237) relativ zu einer Längsachse des Scharnierpfostens (227) drehbar verankert ist, wobei einer Drehung des Scharnierelements (215) relativ zum Befestigungsloch (212) durch eine Drehverankerung der Ankerplatte (237) innerhalb des Gehäuses (204) entgegengewirkt wird.

7. Gehäuseanordnung (200) nach Anspruch 6, wobei die Ankerplatte (237) eine nicht kreisförmige Kontur aufweist und in einem durch das Gehäuse (204) definierten, komplementären nicht kreisförmigen Hohlraum angeordnet ist, um dadurch einer Drehung der Ankerplatte (237) relativ zu dem Gehäuse (204) entgegenzuwirken.

8. Gehäuseanordnung (200) nach einem der Ansprüche 1-7, wobei Gehäusewand (208) aus einem polymeren Kunststoffmaterial besteht.

9. Gehäuseanordnung (200) nach einem der Ansprüche 1-8, wobei die Verbindung der Ankerplatte (237) mit dem Scharnierpfosten (227) eine Schweißverbindung umfasst.

10. Gehäuseanordnung (200) nach Anspruch 9, wobei die Verbindung der Ankerplatte (237) mit dem Scharnierpfosten (227) ferner eine Sicherungsschraube (306) umfasst, die koaxial mit dem Befestigungsloch (212) ist und schraubend in dem Scharnierpfosten (227) aufgenommen ist, so dass ein Teil der Ankerplatte (237) zwischen einem Kopf der Sicherungsschraube (306) und dem Scharnierpfosten (227) festgehalten wird, wobei die Sicherungsschraube (306) die Ankerplatte (237) gegen das Scharnierelement (215) klemmt.

11. Gehäuseanordnung (200) nach einem der Ansprüche 1-10, die ferner eine Klebeschicht (309) umfasst, die zwischen der Ankerplatte (237) und der Gehäusewand (208) angeordnet ist und die Ankerplatte (237) an der Innenseite der Gehäusewand (208) klebend befestigt.

12. Gehäuseanordnung (200) nach Anspruch 11, wobei die Klebeschicht (309) so geformt und positioniert ist, dass sie eine Dichtung gegen das Eindringen von Feuchtigkeit in den Gehäusehohlraum (205) über das Befestigungsloch (212) bildet.

13. Vorrichtung, die Folgendes umfasst:
einen Vorrichtungskörper; und
die Gehäuseanordnung (200) nach einem der Ansprüche 1-12, wobei die Gehäuseanordnung (200) in den Vorrichtungskörper eingebaut ist.

14. Vorrichtung nach Anspruch 13, wobei die Vorrichtung eine Brillenvorrichtung ist und Folgendes umfasst:
einen Brillenrahmen (106), der einen oder mehrere Halter für optische Elemente definiert, um entsprechende optische Elemente im Sichtbereich eines Benutzers zu halten, wobei, wenn die Brillenvorrichtung getragen wird, die Gehäuseanordnung (200) in den Brillenrahmen integriert ist, so dass die Scharnierformation (219) des Scharnierelements (215) aus einem seitlichen Endabschnitt des Brillenrahmens (106) vorsteht;
einen Bügel (109), der gelenkig mit dem Brillenrahmen (106) verbunden ist, um relativ zu dem Brillenrahmen (106) zwischen einer zusammengeklappten Position und einer ausgefahrenen Position, in der sich die Brillenvorrichtung in einer tragbaren Konfiguration befindet, verschiebbar zu sein; und
einen Scharniermechanismus, durch den der Bügel (109) gelenkig mit dem Brillenrahmen (106) verbunden ist, wobei der Scharniermechanismus zusammenwirkende Scharnierformationen (219) umfasst, die jeweils bereitgestellt werden durch:
die Scharnierformation (219) des Scharnierelements (215), das an der Gehäuseanordnung (200) angebracht ist; und
eine komplementäre Scharnierformation (219), die an einem proximalen Ende des Bügels (109) angebracht ist.

15. Verfahren zur Herstellung einer Brillenvorrichtung, wobei das Verfahren Folgendes umfasst:
Anordnen eines Scharnierelements (215) an einer Gehäusewand (208) eines Gehäuses (204) für elektronische Komponenten, so dass eine Scharnierformation (219), die einen Teil des Scharnierelements (215) bildet, von einer Außenseite der Gehäusewand (208) zur Verbindung mit einer komplementären Scharnierformation (219) eines Scharniermechanismus zum gelenkigen Verbinden einer Bügelkomponente (109) mit einem Brillenrahmen (106) vorsteht, wobei ein Flansch (223), der einen Teil des Scharnierelements (215) bildet, an der Außenseite der Gehäusewand (208) angeordnet ist, wobei das Scharnierelement (215) einen Scharnierpfosten (227) umfasst, der sich axial zumindest durch einen Teil des Befestigungslochs (212) erstreckt;
Anordnen einer Ankerplatte (237) an einer Innenseite der Gehäusewand (208) innerhalb eines durch das Gehäuse (204) definierten Gehäusehohlraums (205), wobei die Ankerplatte (237) im Wesentlichen parallel zur Gehäusewand (208) verläuft, wobei das Scharnierelement (215) und die Ankerplatte (237) Metallkomponenten sind und wobei der Scharnierpfosten (227) mit der Ankerplatte (237) verbunden ist; und
Befestigen der Ankerplatte (237) an dem Scharnierelement (215), so dass zumindest ein Teil der Gehäusewand (208) zwischen der Ankerplatte (237) und dem Flansch (223) eingeklemmt ist, wobei einer Bewegung des Scharnierelements (215) weg von der Außenseite der Gehäusewand (208) durch Blockierung der Ankerplatte (237) gegen die Gehäusewand (208) entgegengewirkt wird; und
Anordnen von Elektronik innerhalb des Gehäusehohlraums (205), um die Elektronik an der Ankerplatte (237) anzubringen, so dass die Ankerplatte (237) in Wärmeübertragungsbeziehung mit einer oder mehreren wärmeerzeugenden Komponenten der Elektronik steht, wobei die Ankerplatte (237) und das Scharnierelement (215) thermisch miteinander verbunden sind, um Wärme zwischen sich zu leiten, so dass die Ankerplatte (237) und das Scharnierelement (215) Teil eines Wärmeübertragungspfades von dem Gehäusehohlraum (205) zu einem externen Kühlkörper bilden.

## Revendications

1. Ensemble boîtier (200) comprenant :
un boîtier (204) définissant une cavité de boîtier (205) destinée à contenir des composants électroniques, le boîtier comprenant une paroi de boîtier (208) qui définit un trou de montage (212) s'étendant transversalement à travers celle-ci, la paroi de boîtier (208) comportant un côté extérieur et comportant un côté intérieur opposé qui borde la cavité de boîtier (205) ;
un élément charnière (215) monté au moins en partie dans le trou de montage (212), l'élément charnière (215) comprenant une formation de charnière (219) faisant saillie depuis le côté extérieur de la paroi de boîtier (208) pour être reliée à une formation de charnière (219) complémentaire afin de former un mécanisme de charnière, l'élément charnière (215) étant ancré contre tout déplacement axial à travers le trou de montage (212) vers le côté intérieur, l'élément charnière (215) comprenant un montant de charnière (227) s'étendant axialement à travers au moins une partie du trou de montage (212) ;
une plaque d'ancrage (237) positionnée sur le côté intérieur de la paroi de boîtier (208), la plaque d'ancrage (237) étant orientée transversalement par rapport au trou de montage (212) et étant reliée à l'élément charnière (215) de telle sorte qu'un déplacement axial de la formation de charnière (219) à l'écart du côté extérieur de la paroi de boîtier (208) soit empêché par l'obstruction de la plaque d'ancrage (237) par la paroi de boîtier (208), l'élément charnière (215) et la plaque d'ancrage (237) étant des composants métalliques et le montant de charnière (227) étant relié à la plaque d'ancrage (237) ; et
des composants électroniques situés à l'intérieur de la cavité de boîtier (205), les composants électroniques étant montés sur la plaque d'ancrage (237) de telle sorte que la plaque d'ancrage (237) soit dans une relation de transfert thermique avec un ou plusieurs composants générateurs de chaleur des composants électroniques, la plaque d'ancrage (237) et l'élément charnière (215) étant reliés thermiquement pour permettre une conduction thermique entre eux, de telle sorte que la plaque d'ancrage (237) et l'élément charnière (215) fassent partie d'un chemin de transfert thermique entre la cavité de boîtier (205) et un dissipateur thermique externe.

2. Ensemble boîtier (200) selon la revendication 1, le ou les composants générateurs de chaleur des composants électroniques comprenant une carte de circuit imprimé qui est montée sur la plaque d'ancrage (237) et est reliée à la plaque d'ancrage (237) pour être dans une relation de transfert thermique avec celle-ci.

3. Ensemble boîtier (200) selon la revendication 1 ou 2, la liaison de la plaque d'ancrage (237) à l'élément charnière (215) étant telle que la plaque d'ancrage (237) est en contact serré avec l'élément charnière (215), favorisant ainsi une conduction thermique efficace depuis la plaque d'ancrage (237) vers l'élément charnière (215).

4. Ensemble boîtier (200) selon l'une quelconque des revendications 1 à 3, l'élément charnière (215) étant ancré contre tout déplacement axial vers le côté intérieur de la paroi de boîtier (208) par une bride (223) faisant partie de l'élément charnière (215), la bride (223) étant positionnée sur le côté extérieur de la paroi de boîtier (208) et s'étendant transversalement par rapport au trou de montage (212), de telle sorte qu'au moins une partie de la paroi de boîtier (208) soit intercalée entre la plaque d'ancrage (237) et la bride (223), la plaque d'ancrage (237) présentant une surface plus grande que la bride (223) de l'élément charnière (215).

5. Ensemble boîtier (200) selon l'une quelconque des revendications 1 à 4, comprenant en outre un élément d'étanchéité positionné radialement autour du montant de charnière (227) pour produire une interface d'étanchéité entre le montant de charnière (227) et la paroi de boîtier (208).

6. Ensemble boîtier (200) selon l'une quelconque des revendications 1 à 5, la liaison de la plaque d'ancrage (237) à l'élément charnière (215) étant telle que la plaque d'ancrage (237) est solidaire en rotation de l'élément charnière (215), la plaque d'ancrage (237) étant ancrée en rotation par rapport à un axe longitudinal du montant de charnière (227), la rotation de l'élément charnière (215) par rapport au trou de montage (212) étant empêchée par l'ancrage en rotation de la plaque d'ancrage (237) à l'intérieur du boîtier (204).

7. Ensemble boîtier (200) selon la revendication 6, la plaque d'ancrage (237) présentant un contour non circulaire et étant positionnée dans une cavité non circulaire complémentaire définie par le boîtier (204), pour empêcher ainsi une rotation de la plaque d'ancrage (237) par rapport au boîtier (204).

8. Ensemble boîtier (200) selon l'une quelconque des revendications 1 à 7, la paroi de boîtier (208) étant constituée d'une matière plastique polymère.

9. Ensemble boîtier (200) selon l'une quelconque des revendications 1 à 8, la liaison de la plaque d'ancrage (237) au montant de charnière (227) comprenant une liaison soudée.

10. Ensemble boîtier (200) selon la revendication 9, la liaison de la plaque d'ancrage (237) au montant de charnière (227) comprenant en outre une vis de fixation (306) coaxiale avec le trou de montage (212) et reçue par vissage dans le montant de charnière (227), de telle sorte qu'une partie de la plaque d'ancrage (237) soit maintenue captive entre une tête de la vis de fixation (306) et le montant de charnière (227), la vis de fixation (306) serrant la plaque d'ancrage (237) contre l'élément charnière (215).

11. Ensemble boîtier (200) selon l'une quelconque des revendications 1 à 10, comprenant en outre une couche adhésive (309) positionnée entre la plaque d'ancrage (237) et la paroi de boîtier (208), fixant par adhésif la plaque d'ancrage (237) au côté intérieur de la paroi de boîtier (208).

12. Ensemble boîtier (200) selon la revendication 11, la couche adhésive (309) étant formée et positionnée de manière à créer un joint contre les intrusions ou l'humidité dans la cavité de boîtier (205) par l'intermédiaire du trou de montage (212).

13. Dispositif, qui comprend :
un corps de dispositif ; et
l'ensemble boîtier (200) selon l'une quelconque des revendications 1 à 12, l'ensemble boîtier (200) étant incorporé dans le corps de dispositif.

14. Dispositif selon la revendication 13, le dispositif étant un dispositif de lunettes comprenant :
une monture de lunettes (106) qui définit un ou plusieurs supports d'éléments optiques destinés à maintenir des éléments optiques respectifs dans le champ de vision d'un utilisateur lorsque le dispositif de lunettes est porté, l'ensemble boîtier (200) étant incorporé dans la monture de lunettes de telle sorte que la formation de charnière (219) de l'élément charnière (215) fasse saillie à partir d'une partie extrémité latérale de la monture de lunettes (106) ;
une branche (109) qui est reliée par charnière à la monture de lunettes (106) afin de pouvoir se déplacer par rapport à la monture de lunettes (106) entre une position repliée et une position étendue dans laquelle le dispositif de lunettes est dans une configuration mettable ; et
un mécanisme de charnière au moyen duquel la branche (109) est reliée par charnière à la monture de lunettes (106), le mécanisme de charnière comprenant des formations de charnière (219) coopérantes fournies respectivement par :
la formation de charnière (219) de l'élément charnière (215) monté sur l'ensemble boîtier (200) ; et
une formation de charnière (219) complémentaire fixée à une extrémité proximale de la branche (109).

15. Procédé de fabrication d'un dispositif de lunettes, le procédé consistant à :
positionner un élément charnière (215) sur une paroi de boîtier (208) d'un boîtier (204) destiné à des composants électroniques, de telle sorte qu'une formation de charnière (219) faisant partie de l'élément charnière (215) fasse saillie à partir d'un côté extérieur de la paroi de boîtier (208) en vue de sa liaison à une formation de charnière (219) complémentaire d'un mécanisme de charnière afin de relier par charnière un composant de branche (109) à une monture de lunettes (106), une bride (223) faisant partie de l'élément charnière (215) étant positionnée sur le côté extérieur de la paroi de boîtier (208), l'élément charnière (215) comprenant un montant de charnière (227) s'étendant axialement à travers au moins une partie du trou de montage (212) ;
positionner une plaque d'ancrage (237) sur un côté intérieur de la paroi de boîtier (208), à l'intérieur d'une cavité de boîtier (205) définie par le boîtier (204), la plaque d'ancrage (237) étant sensiblement parallèle à la paroi de boîtier (208), l'élément charnière (215) et la plaque d'ancrage (237) étant des composants métalliques et le montant de charnière (227) étant relié à la plaque d'ancrage (237) ;
fixer la plaque d'ancrage (237) à l'élément charnière (215), de telle sorte qu'au moins une partie de la paroi de boîtier (208) soit intercalée entre la plaque d'ancrage (237) et la bride (223), un déplacement de l'élément charnière (215) à l'écart du côté extérieur de la paroi de boîtier (208) étant empêché par l'obstruction de la plaque d'ancrage (237) contre la paroi de boîtier (208) ; et
positionner des composants électroniques à l'intérieur de la cavité de boîtier (205) de manière à monter les composants électroniques sur la plaque d'ancrage (237) de telle sorte que la plaque d'ancrage (237) soit dans une relation de transfert thermique avec un ou plusieurs composants générateurs de chaleur des composants électroniques, la plaque d'ancrage (237) et l'élément charnière (215) étant reliés thermiquement pour permettre une conduction thermique entre eux, de telle sorte que la plaque d'ancrage (237) et l'élément charnière (215) fassent partie d'un chemin de transfert thermique entre la cavité de boîtier (205) et un dissipateur thermique externe.
